(19) **Europäisches Patentamt**

**European Patent Office**

**Office européen des brevets**

(11) Veröffentlichungsnummer: **0 264 520 B1**

(12) **EUROPÄISCHE PATENTSCHRIFT**

(45) Veröffentlichungstag der Patentschrift: **08.01.92**

(51) Int. Cl.⁵: **F16M 7/00**

(21) Anmeldenummer: **87101282.9**

(22) Anmeldetag: **30.01.87**

(54) **Nivellierschuh.**

(30) Priorität: **24.10.86 CH 4237/86**

(43) Veröffentlichungstag der Anmeldung:
**27.04.88 Patentblatt 88/17**

(45) Bekanntmachung des Hinweises auf die
Patenterteilung:
**08.01.92 Patentblatt 92/02**

(84) Benannte Vertragsstaaten:
**AT DE ES FR GB IT SE**

(56) Entgegenhaltungen:
**DE-A- 2 448 451**
**DE-B- 1 297 409**
**FR-A- 664 570**
**FR-E- 36 725**

(73) Patentinhaber: **Air-Loc Schrepfer AG**
**Eigenheimstrasse 22**
**CH-8700 Küsnacht(CH)**

(72) Erfinder: **Schrepfer, Rudolf**
**Eigenheimstrasse 22**
**CH-8700 Küsnacht(CH)**

(74) Vertreter: **Blum, Rudolf Emil Ernst et al**
**c/o E. Blum & Co Patentanwälte Vorderberg**
**11**
**CH-8044 Zürich(CH)**

Rank Xerox (UK) Business Services

## Beschreibung

Die Erfindung betrifft einen Nivellierschuh aus zueinander formschlüssigen Bauteilen zur Höheneinstellung von Maschinen und Geräten, mit einer Fussplatte, einer vertikal dazu geführten Kopfplatte und zumindest einem dazwischenliegenden Keil, der durch eine ihn durchsetzende Schraubspindel gegenüber Fuss- und Kopfplatte verschiebbar ist, wobei die Schraubspindel in einem Zapfen verschraubbar ist, der axial verschiebbar in Kopf- und Fussplatte geführt ist, wobei der Keil sowie die Fuss- und Kopfplatte an ihren gegenseitigen Anlageflächen mit Führungsleisten versehen sind.

Ein solcher Nivellierschuh ist zum Beispiel durch die DE-B-1 297 409 bekannt. Das formschlüssige Zueinanderliegen betrifft die Auflageflächen zwischen Keil und Kopfplatte sowie zwischen Keil und Fussplatte, in Richtung der Schraubspindel, aber auch die Gleitflächen an den Führungsleisten. Letztere sind in entsprechenden Längsrinnen verschiebbar geführt und dienen zur seitlichen Fixierung von Kopf-, Fussplatte und Keil. Bei den vom Nivellierschuh getragenen Maschinen oder Geräten treten durch die Arbeitsdrehzahlen sowie durch andere rhytmische Schwungwechsel ein rasches Kräftespiel und damit verschiedene Schwingungsarten auf, die natürlich auch auf den Nivellierschuh übertragen werden. Um diese Schwingungen zu dämpfen, wurde bereits vorgeschlagen die Bodenfläche der Fussplatte und die Deckfläche der Kopfplatte mit schwingungsdämpfenden Belägen zu versehen. Eine solche Massnahme kann natürlich nicht dann zufriedenstellend sein, wenn der Nivellierschuh nicht nur zur elastischen Lagerung dient, sondern zu einer präzisen Höheneinstellung der von ihm getragenen Maschine.

Die Erfindung zeigt nunmehr einen Weg auf, um den gefährlichen Resonanzbereich unwirksam werden zu lassen. Dies wird nunmehr dadurch erreicht, dass die Eigenfrequenz des Nivellierschuhs verändert wird. Beim bekannten Nivellierschuh musste die Eigenfrequenz seiner Bauteile berücksichtigt werden, da die Bauteile lose aneinander anlagen, wobei herstellungsbedingte, zumutbare Toleranzen an den Gleitflächen vorhanden sind, die diese Eigenfrequenz der einzelnen Bauteile emöglichen. Beim Hochfahren der vom Nivellierschuh getragenen Maschine kommt man nunmehr durch den Eigenfrequenzbereich der verschiedenen Bauteile des Nivellierschuhs, so dass immer wieder einzelne Partien des Nivellierschuhs zur Resonanz kommen. Es ist klar verständlich, dass dies sowohl für die Gleit- und Führungsflächen der einzelnen Bauteile sowie auch für das präzise Höhenmass des gesamten Nivellierschuhs nur von Nachteil ist. Es wird die Schaffung eines Nivellierschuhs eingangs genannter Art bezweckt, mit dem dieser Nachteil vermieden werden kann.

Der erfindungsgemässe Nivellierschuh ist gekennzeichnet durch getrennte, vertikal und horizontal wirkende Federelemente, die die Nivellierschuh-Bauteile Fussplatte, Kopfplatte und Keil gegeneinander verspannen und so deren Formschluss federelastisch aufrechterhalten.

Es ist zwar durch die FR-A-664 570 und FR-E-36 725 bereits bekannt, bei einem Nivellierschuh in einer einzigen Richtung liegende Federn zwischen einer Fussplatte und einer Kopfplatte anzuordnen; ein Keil und ein Zapfen fehlen. Die vorerwähnten Federn dienen zur Aufhebung des Flankenspiels einer Schraubspindel. Diese Federn ergeben horizontale und vertikale Kraftkomponenten, wobei erstere wesentlich grösser sind als die anderen. Diese Konzeption ist nicht geeignet, einen Nivellierschuh zu schaffen, der eine hohe Eigenfrequenz hat, damit man, wenn überhaupt, nur einmal durch diesen Bereich hindurchfährt, bis die Arbeitsmaschine ihre Nenndrehzahl erreicht hat. Um dies zu erreichen, muss die vertikale Kraftkomponente der Federn möglichst gross sein.

Im folgenden werden der bekannte Nivellierschuh nach der DE-B-1 297 409 in einer Ausführungsform sowie mehrere Ausführungsbeispiele des erfindungsgemässen Nivellierschuhs anhand von Zeichnungen erläutert.

Es zeigen:

Figur 1 der bekannte Nivellierschuh eingangs genannter Art, in einer schaubildlichen Explosionsdarstellung, wobei dieser Nivellierschuh erfindungsgemäss ausgestaltet werden kann,

Figur 2 einen Teil des Nivellierschuhs nach Figur 1 mit der erfindungsgemässen Massnahme, in Draufsicht,

Figur 3 einen Vertikalschnitt durch den Bauteil nach Figur 2,

Figur 4 einen Längs-Vertikalschnitt durch den Nivellierschuh nach Figur 1, mit der erfindungsgemässen Massnahme

Figur 5 eine gleiche Schnittdarstellung wie in Figur 4, bei einer anderen Ausführungsform des erfindungsgemässen Nivellierschuhs,

Figur 6 eine gleiche Darstellung wie in den Figuren 4 und 5, bei einer weiteren Ausführungsform des erfindungsgemässen Nivellierschuhs, und

Figur 7 einen Ausschnitt aus einer gleichen Darstellung wie in den Figuren 4-6, bei einer weiteren Ausführungsform des erfindungsgemässen Nivellierschuhs.

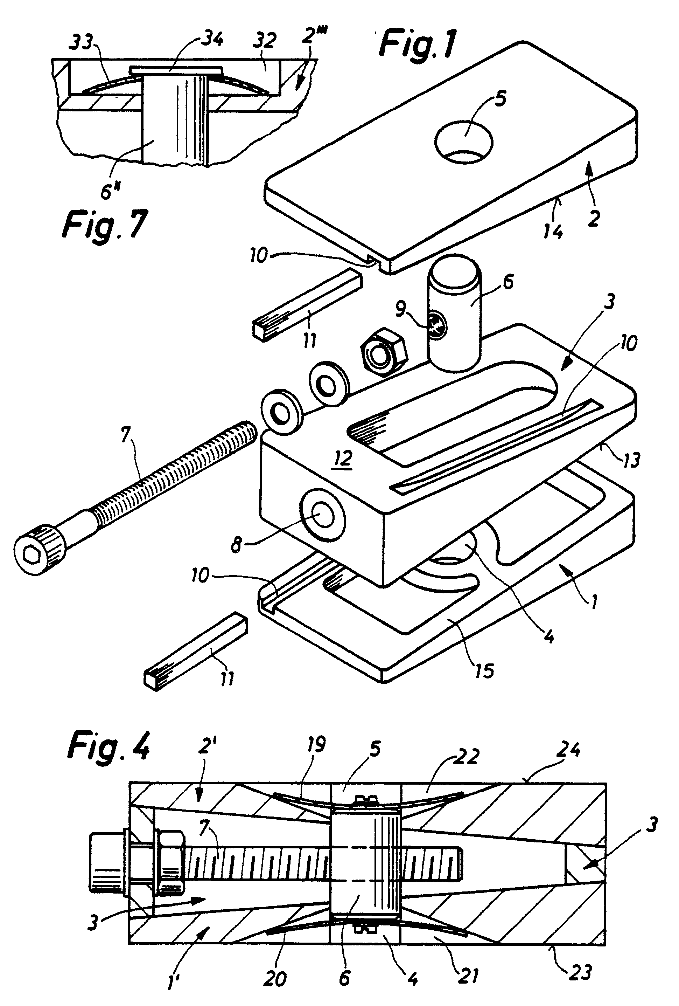

Der in Figur 1 gezeigte bekannte Nivellierschuh hat eine Fussplatte 1, eine Kopfplatte 2 und einen dazwischenliegenden Keil 3. Fuss- und Kopfplatte 1 bzw. 2 sind mit Durchbrechungen 4 und 5 versehen, mit denen die beiden Platten 1 und 2 auf einem Zapfen 6 vertikal verschiebbar geführt sind.

Ueber diesen Zapfen 6 ist also die Kopfplatte 2 gegenüber der Fussplatte 1 vertikal geführt. Der Keil 3 wird von einer Schraubspindel 7 durchsetzt, wenn diese durch ein Durchgangsloch 8 hindurchragt und im Gewindeloch 9 des Zapfens 6 verschraubbar ist. Auf diese Weise ist der Keil 3 durch die Schraubspindel 7 gegenüber den beiden Platten 1 und 2 verschiebbar. Die Fussplatte 1, die Kopfplatte 2 und der Keil 3 sind mit sich in Richtung der Schraubspindel 7 erstreckenden Führungsrinnen 10 versehen, in denen Führungsleisten 11 liegen. Der Keil 3 hat Anlageflächen 12 und 13 für daran zum Anliegen bestimmte Flächen 14 und 15 der Kopfplatte 2 und der Fussplatte 1. Die Führungsleisten 11 (Einlege-Passfedern) erlauben ein Verschieben des Keiles gegenüber den beiden Platten 1 und 2 in Richtung der Schraubspindel 7 und stellen eine seitliche Führung dar, so dass die drei Bauteile 1,2 und 3 in der Horizontalen, rechtwinklig zur Schraubspindel 7, festgelegt sind. Hierbei liegen die seitlichen Flanken der Führungsleisten 11 an den zugeordneten Flanken der jeweiligen Rinne 10 an. Aus wirtschaftlichen Gründen müssen für die Führung der Führungsleisten 11 in der zugeordneten Gleitrinne 10 gewisse Fertigungstoleranzen zugestanden werden, so dass also ein gewisses Speil auftritt.

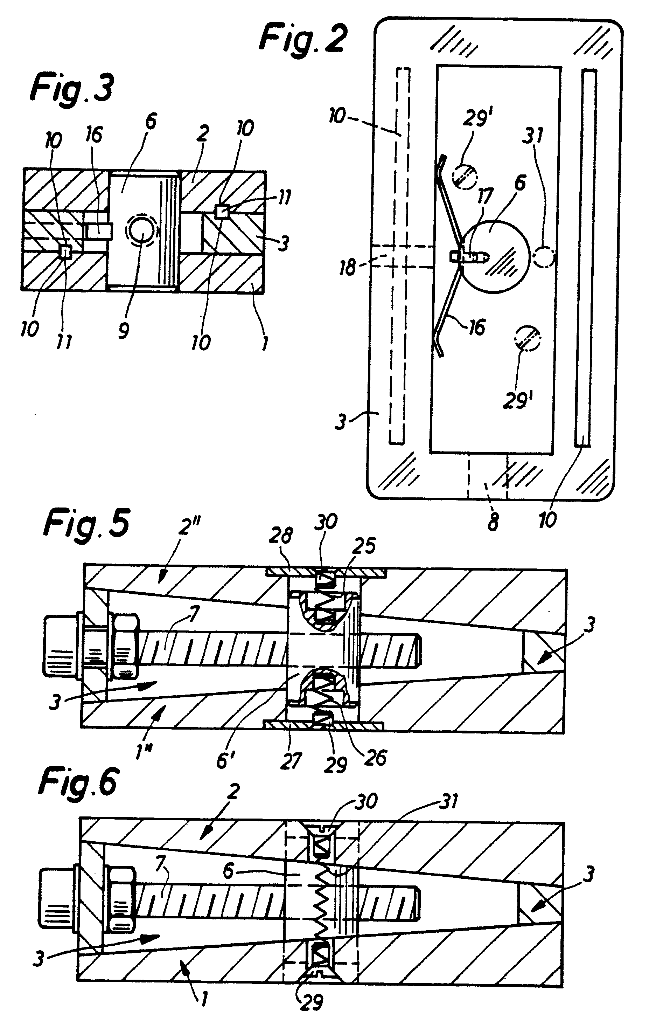

Zur erfindungsgemässen Ausbildung des Nivellierschuhs sind nunmehr gespannte Federelemente vorhanden. Beim Ausführungsbeispiel nach Figur 2 liegt ein als Blattfeder ausgebildetes Federelement 16 zwischen dem Zapfen 6 und dem Keil 3. Das Federelement 16 is also einerends am Zapfen 6 und andererends am Keil 3 abgestützt und drückt in der Darstellung nach Figur 2 den Keil 3 gegenüber dem Zapfen 6 nach links. Da der Zapfen 6 in den beiden Durchbrechungen 4 und 5 der Platten 1 und 2 geführt ist, werden hierdurch die drei Bauteile 1, 2 und 3 in der Horizontalen und rechtwinklig zur Schraubspindel 7 federelastisch verspannt. Hierdurch werden die Führungsleisten 11 mit ihren Flanken federelastisch in Formschluss mit den zugeordneten Flanken der Rinnen 10 gehalten. Die Vorspannung des Federelementes 16 kann auf zweierlei Art geändert werden. Im dargestellten Fall nach Figur 2 kann die Abstützstelle des Federelementes 16 am Zapfen 6 verändert werden, wobei eine Schraube 16 längenverstellbar im Zapfen 6 sitzt. Die zapfenseitige Abstützstelle des Federelementes kann somit in verschiedene Abstände zum Zapfen 6 eingestellt werden, wobei für den Zugang zur Verstellschraube 17 der Keil 3 mit einer Durchgangsbohrung 18 versehen ist. Bei dieser Art der Veränderung der Vorspannung des Federelementes 16 wird also eine Abstützstelle verstellt. Die Vorspannung des Federelementes kann aber auch dadurch erreicht werden, dass das Federelement auswechselbar angeordnet ist, zum Einbau eines anderen Federelementes mit einer anderen Federcharakteristik.

Aus Figur 4 ist ersichtlich, wie die Bauteile des Nivellierschuhs in der Vertikalen durch gespannte Federelemente miteinander verblockt werden. Gleiche Bauteile sind wie in Figur 1 bezeichnet. Beim Beispiel nach Figur 4 sind zwei als Blattfedern ausgebildete Federelemente 19 und 20 vorhanden, die einerends am Zapfen 6 und andererends an der Fuss- bzw. Kopfplatte 1',2' abgestützt sind. Die beiden Platten 1' und 2' sind hierbei mit wannenförmigen Ausnehmungen 21 und 22 versehen, damit die Federelemente 19,20 mit ihren Befestigungsschrauben nicht über die Basisfläche 23 der Fussplatte 1' und der Deckfläche 24 der Kopfplatte 2' hervorragen. Durch diese Federelemente 19 und 20 werden die Bauteile 1', 2' und 3 in der Vertikalen federelastisch in ihrem Formschluss gehalten und somit federelastisch verblockt. Die Ausbildung nach Figur 4 wird in zweckmässiger Weise mit der Ausbildung nach Figur 2 kombiniert, so dass also alle Bauteile des Nivellierschuhs in der Vertikalen und der Horizontalen miteinander verblockt sind.

In Figur 5 ist eine weitere Ausführungsform für ein Verblocken der Bauteile in der Vertikalen gezeigt. Die Federelemente 25 und 26 sind hierbei als Schraubenzugfedern ausgebildet, die einerends am Zapfen 6' und andererends über Einlegeplatten 27 bzw. 28 und der Fuss- und Kopfplatte 1" bzw. 2" abgestützt sind. In den Platten 27,28 sitzen Senkschrauben 29,30, auf deren Gänge die Windungen der Federn 25,26 verschraubbar sind. Durch Verschrauben der Schrauben 20,30 wird die wirksame Federlänge der Federn 25,26 verändert und somit die Vorspannung dieser Federelemente 25,26. Die anderen Enden der Federn 25, 26 sitzen ebenfalls in Gewindegängen, die sich im Zentrum des Zapfens 6' befinden.

Beim Beispiel nach Figur 6 ist nur ein Federelement in der Form einer Schraubenzugfeder 31 vorhanden, die einerends an der Fussplatte 1 und andererends an der Kopfplatte 2 abgestützt ist. Hierzu dienen wiederum die zwei Senkschrauben 29 und 30. Durch Verschrauben der Federwindungen in den Gewindegängen der Schrauben 29 und 30 wird wiederum die wirksame Federlänge der Feder 31 verändert. Die Feder 31 liegt aber, im Gegensatz zu den Federn 25 und 26 vom Beispiel nach Figur 5, nicht mehr im Zentrum des Zapfens 6 sondern ausserhalb, wie es in Figur 2 angedeutet ist. Bei einem anderen, nicht im Vertikalschnitt gezeigten Ausführungsbeispiel könnte ein solches Federelement 31 auch in zweifacher Weise und in anderer Lage vorgesehen werden, so wie es mittels der Senkrschraube 29' in Figur 2 gezeigt ist. Vor allem wenn der Nivellierschuh eine grosse und damit auch lange Ausbildung hat, empfehlen sich mehrere Federelemente in der Vertikalen. Bei den bisher erläuterten Ausführungsbeispielen waren die Federelemente als Zugfedern ausgebildet. In Figur 7 ist angedeutet, wie ein in der Vertikalen wirkendes Federelement als Druckfeder ausgebildet sein kann. Die Kopfplatte 2''' ist mit einer Ausnehmung 32 versehen, in der eine Blattfeder 33 liegt, die vom Kopf 34 eines Zapfens 6'' hintergriffen wird. Aus Montagegründen wird in der Praxis der Kopf 34 lösbar vom Zapfen 6'' ausgebildet.

Durch das federelastische Verblocken der einzelnen Bauteile des Nivellierschuhs wird der Formschluss dieser Bauteile federelastisch aufrecht erhalten. Bei einer erregenden Frequenz muss nun nicht mehr mit der verhältnismässig niedrigen Eigenfrequenz der lose aneinanderliegenden Bauteile des Nivellierschuhs gerechnet werden, sondern der nunmehr schwingungsmässig als Block vorliegende Nivellierschuh hat eine andere, höhere Eigenfrequenz. Hierdurch wird vermieden, dass beim Durchfahren der Eigenfrequenz der Maschine oder des Gerätes, das auf dem Nivellierschuh steht, unerwünschte Prellschwingungen im Nivellierschuh entstehen. Diese vermiedenen Prellschwingungen zwischen den einzelnen Bauteilen des Nivellierschuhs hatten bisher ein Verformen der Bauteile, ein ständiges Vergrössern des Lagerspiels zwischen den Bauteilen und eine Veränderung der mittels des Nivellierschuhs eingestellten präzisen Höhenausrichtung der Maschine zur Folge. Die nunmehr erhaltene andere Eigenfrequenz des als ein Block vorliegenden Nivellierschuhs kann noch durch Verändern der Vorspannung der Federelemente geändert werden. Diese veränderliche Vorspannung der Federelemente wird man empirisch vornehmen, je nach Art der aufliegenden Maschine und ihrer Arbeitsbedingungen. Durch diese regulierbare Vorspannung der Federelemente kann jegliches herstellungsbedingtes Spiel zwischen den Bauteilen aufgehoben werden, wodurch eine Genauigkeit im μm-Bereich verbessert wird. Eine solche Präzision könnte auf andere Art nur mit extrem teuren, aufwendigen Bearbeitungsmethoden erreicht werden. Der schwingungsmässig nunmehr als ein Block vorliegende Nivellierschuh hat auch noch, statisch gesehen, den Vorteil, dass er als ein Block lagerbar und transportierbar ist; d.h. die einzelnen Bauteile des Nivellierschuhs werden mechanisch zusammengehalten, können also nicht mehr auseinanderfallen. Ein solches Auseinanderfallen der einzelnen Bauteile beim Transport, bei der Lagerung und bei der Vormontage hatte ja einen verhältnismässig grossen Mehraufwand zur Wiedermontage zur Folge mit der Gefahr einer Fehlmontage und hierdurch entstehende Funktionsmängel. Durch die erwähnte nunmehr hohe Eigenfrequenz des shwingungsmässig als ein Block vorliegenden Nivellierschuhs wird auch der grosse Vorteil erzielt, dass diese Art des Nivellierschuhs bei Stockwerkaufstellungen von Maschinen und Geräten sehr vorteilhaft ist, da die Eigenfrequenz des Nivellierschuhs höher als die Deckenfrequenz eingestellt werden kann, so dass Resonanz vermieden wird.

## Patentansprüche

1. Nivellierschuh aus zueinander fromschlüssigen Bauteilen zur Höheneinstellung von Maschinen und Geräten, mit einer Fussplatte (1,1',1"), einer vertikal dazu geführten Kopfplatte (2,2',2") und zumindeste einem dazwischenliegenden Keil (3), der durch eine ihn durchsetzende Schraubspindel (7) gegenüber Fuss- und Kopfplatte verschiebbar ist, wobei die Schraubspindel (7) in einem Zapfen (6,6',6") verschraubbar ist, der axial verschiebbar in Kopf- und Fussplatte geführt ist, wobei der Keil (3) sowie die Fuss- und Kopfplatte an ihren gegenseitigen Anlageflächen mit Führungsleisten (11) versehen sind, gekennzeichnet durch getrennte, vertikal und horizontal wirkende Federelemente (16,19,20,25,26,31,33), die die Nivellierschuh-Bauteile, Fussplatte (1,1',1"), Kopfplatte (2,2',2") und Keil (3) gegeneinander verspannen und so deren Formschluss federelastisch aufrechterhalten.

2. Nivellierschuh nach Anspruch 1, gekennzeichnet durch zumindest ein horizontal wirkendes Federelement (16) zur Aufrechterhaltung des Formschlusses in der Horizontalen.

3. Nivellierschuh nach Anspruch 1, gekennzeichnet durch zumindest ein vertikal wirkendes Federelement (19,20,31,33) zur Aufrechterhaltung des Formschlusses in der Vertikalen.

4. Nivellierschuh nach Anspruch 1, dadurch gekennzeichnet, dass die Vorspannung der Federelemente veränderlich ist.

5. Nivellierschuh nach Anspruch 1, dadurch gekennzeichnet, dass die Federelemente einerends am Zapfen (6) und andererends an Kopf- bzw. Fussplatte (2,1) abgestützt sind.

6. Nivellierschuh nach Anspruch 1, gekennzeichnet durch zumindest ein vertikal stehendes Federelement (31), das einerends an der Kopfplatte (2) und andererends an der Fussplatte (1) abgestützt ist.

7. Nivellierschuh nach Anspruch 4, gekennzeichnet durch eine verstellbare Abstützstelle (17) für ein Federelement, zum Erzielen einer veränderten Vorspannung.

8. Nivellierschuh nach Anspruch 4, dadurch gekennzeichnet, dass ein Federelement auswechselbar angeordnet ist, zum Einbau eines anderen Federelementes mit einer anderen Federcharakteristik, zum Erzielen einer veränderten Vorspannung.

## Claims

1. Height adjustment device comprising mutually form-locked elements for adjusting the height of machines and apparatuses, with a base plate (1, 1', 1"), a top plate (2, 2', 2") vertically guided with respect to the former, and at least one intermediate wedge (3) movable with respect to the top and base plates through the action of a threaded spindle (7) which traverses it, where the spindle (7) is threaded in a traverse (6, 6', 6") movable with respect to and guided axially in the top and the base plates, the mating surfaces of the wedge, the top and the base plate being provided with guide rails (11), characterized by separate elastic means (16, 19, 20, 25, 26, 31, 33) which act vertically and horizontally to brace the elements of the device, base plate (1,1',1"), top plate (2, 2', 2") and wedge (3) against each other so as to resiliently maintain their mutual form-locked arrangement.

2. Height adjustment device according to claim 1, characterized in that it comprises at least one horizontally urging elastic element (16) which maintains the horizontal form-lock.

3. Height adjustment device according to claim 1, characterized in that is comprises at least one vertically urging elastic element (19, 20, 31, 33) which maintains the vertical form-lock.

4. Height adjustment device according to claim 1, characterized in that the bias of the elastic elements is variable.

5. Height adjustment device according to claim 1, characterized in that the elastic elements are supported at one end at the traverse (6) and at the other end at the top and base plate (2, 1), respectively.

6. Height adjustment device according to claim 1, characterized by at least one upstanding elastic element (31) which is supported at one end at the top plate (2) and at the other end at the base plate (1).

7. Height adjustment device according to claim 4, characterized by an adjustable support area (17) for an elastic element in order to obtain a changed bias.

8. Height adjustment device according to claim 4, characterized in that an elastic element is arranged exchangably, to allow the mounting of another elastic element having a different elastic characteristic, in order to obtain a changed bias.

## Revendications

1. Cale de mise à niveau composée d'éléments accouplés par engagement mécanique, pour régler en hauteur la position de machines et d'appareils, avec une plaque inférieure (1, 1', 1"), une plaque supérieure (2, 2', 2") guidée verticalement par rapport à la plaque inférieure, et au moins un coin (3) intermédiaire mobile par rapport aux plaques sous l'action d'une tige filetée (7) qui le traverse et est engagée par vissage dans une traverse (6, 6', 6") guidée en direction axiale dans les plaques supérieure et inférieure, les surfaces en appui réciproque du coin (3) et des plaques étant munies de rails de guidage (11), caractérisée par des organes élastiques séparés (16, 19, 20, 25, 26, 31, 33) agissant verticalement et horizontalement qui serrent les éléments régulateurs de niveau, plaque inférieure (1, 1', 1"), plaque supérieure (2, 2', 2") et coin (3) en un engagement réciproque intime, de manière à maintenir leur accouplement mécanique par une force élastique.

2. Cale selon la revendication 1, caractérisée par au moins un organe élastique (16) agissant à l'horizontale pour maintenir l'accouplement mécanique horizontal.

3. Cale selon la revendication 1, caractérisée par au moins un organe élastique (19, 20, 31, 33) agissant à la verticale pour maintenir l'accouplement mécanique vertical.

4. Cale selon la revendication 1, caractérisée en ce que la prétension des organes élastiques est variable.

5. Cale selon la revendication 1, caractérisée en ce que les organes élastiques s'appuient à une extrémité sur la traverse (6) et à l'autre extrémité sur les plaques supérieure respectivement inférieure (2, 1).

6. Cale selon la revendication 1, caractérisée par au moins un organe élastique (31) vertical qui s'appuie à une extrémité sur la plaque supérieure (2) et à l'autre extrémité sur la plaque inférieure (1).

7. Cale selon la revendication 4, caractérisée par une surface de support (17) réglable pour un organe élastique afin d'obtenir une prétension changée.

8. Cale selon la revendication 4, caractérisée en ce qu'un organe élastique est échangeable pour permettre le montage d'un autre organe élastique ayant une caractéristique élastique différente, afin d'obtenir une prétension changée.

**Fig.1**

**Fig.7**

**Fig.4**

Fig. 2

Fig. 3

Fig. 5

Fig. 6